# EUROPÄISCHE PATENTSCHRIFT

(11) **EP 3 204 209 B1**
(45) Veröffentlichungstag und Bekanntmachung des Hinweises auf die Patenterteilung: **11.03.2020**
(21) Anmeldenummer: 15760432.3
(22) Anmeldetag: 02.09.2015
(51) Int. Cl.: B29C 48/32, B29C 48/70, B29C 48/25, B29C 48/27, B29C 48/10, B29C 48/36

(54) **BLASKOPF MIT WENDEVORRICHTUNG UND SPÜLVERFAHREN**
BLOWN FILM EXTRUSION HEAD WITH INVERTER DEVICE AND A PURGING METHOD
TÊTE D'EXTRUSION À FILM SOUFFLÉE AVEC DISPOSITIF INVERSEUR ET PROCÉDÉ DE PURGE

(30) Priorität: 03.09.2014 DE 102014112713
(43) Veröffentlichungstag der Anmeldung: 16.08.2017
(73) Patentinhaber: Windmöller & Hölscher KG, 49525 Lengerich (DE)
(72) Erfinder: BACKMANN, Martin, 49525 Lengerich (DE); JÄCKERING, Hermann-Josef, 48488 Emsbüren (DE); BUSSMANN, Markus, 45147 Essen (DE); LIESBROCK, Bernd, 49525 Lengerich (DE); GOLUBSKI, Karsten, 45721 Haltern am See (DE)
(86) Internationale Anmeldenummer: PCT/EP2015/070070
(87) Internationale Veröffentlichungsnummer: WO 2016/034636

(56) Entgegenhaltungen:
- EP-A1- 0 887 172
- CH-A- 512 989
- CN-B- 101 691 061
- JP-U- S5 869 415
- US-A- 3 911 073
- US-A1- 2011 001 267

## Beschreibung

Die vorliegende Erfindung betrifft einen Blaskopf aufweisend eine Wendevorrichtung zum Wenden einer Schmelze in einem Schmelzekanal sowie ein Verfahren zur Durchführung eines Spülvorgangs in einem Blaskopf.

Es ist bekannt, dass Extrusionsvorrichtungen verwendet werden, um eine Kunststoffschmelze zu erzeugen. Diese Kunststoffschmelze kann in unterschiedlichster Weise weiterverwendet werden. So ist es beispielsweise denkbar, die Schmelze in eine Kavität einer Spritzgussvorrichtung einzubringen, um dort entsprechende Bauteile durch Spritzguss zu erzeugen. Auch ist es bekannt, dass die Schmelze für ein sogenanntes Blasextrusionsverfahren zur Verfügung gestellt wird, bei welcher eine Blasfolie extrudiert wird. In sämtlichen Fällen ist es erforderlich, dass am Ende des Extruders die verflüssigte Schmelze über entsprechende Schmelzekanäle an den jeweiligen Ort der Verwendung transportiert wird. Diese Kanäle können beliebig komplex sein und insbesondere sich auch auf einzelne Kanäle aufteilen.

Nachteilhaft bei den bekannten Lösungen der Extrusionsvorrichtungen ist es, dass diese einen hohen Aufwand für den Materialwechsel mit sich bringen. So muss ein sogenannter Spülvorgang durchgeführt werden, wenn ein Materialwechsel von einem ersten Schmelzematerial auf ein zweites Schmelzematerial erfolgen soll. Wird beispielsweise bei einer Blasfolienextrusionsvorrichtung eine gewisse Zeit ein Produkt mit einer blauen Folienfarbe hergestellt und anschließend wird ein Wechsel auf eine transparente Folienfarbe gewünscht, so muss erst die blaue Folienfarbe und das entsprechende Schmelzematerial aus den einzelnen Schmelzekanälen gespült werden. Hierfür wird bereits mit dem Folgematerial die Extrusionsvorrichtung betrieben, bis der größte Teil des alten Materials der Schmelze ausgespült worden ist.

Da bei Schmelzekanälen im Randbereich dieser Schmelzekanäle die Transportgeschwindigkeit im Wesentlichen gleich null ist, das alte Material dort sozusagen anhaftet, ist der Spülvorgang sehr zeitaufwendig. Bei Blasextrusionsvorrichtungen mit einem Durchsatz von bis zu ca. 120 kg Schmelze pro Stunde kann dabei ein Spülvorgang üblicherweise 20 min. bis 1,5 Std. in Anspruch nehmen. Für jede Folienschicht, für welche ein Materialwechsel erfolgen soll, führt dies demnach zu 120 kg oder mehr Ausschussmaterial der Schmelze. Bei mehreren Folienschichten multipliziert sich diese Menge mit der Anzahl der Folienschichten, auch wenn nur eine einzige Folienschicht gespült wird. Damit können Ausschussraten von bis zu 1000 kg erreicht werden. Gleichzeitig stellt die Spülzeit eine Totzeit für die Maschine dar, in welcher keine verwertbare Produktion stattfinden kann. Dementsprechend sind bekannte Extrusionsvorrichtungen beispielsweise aus den Druckschriften US2011/001267 A1 und CN101691061 B mit dem entsprechenden Spülverfahren hinsichtlich des Zeitaufwandes und hinsichtlich der entstehenden Kosten sowie des Materialausschusses mit deutlich erkennbaren Nachteilen behaftet.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Zeit für den Spülvorgang zu reduzieren.

Voranstehende Aufgabe wird gelöst durch einen Blaskopf mit den Merkmalen des Anspruchs 1 sowie ein Verfahren mit den Merkmalen des Anspruchs 10. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Blaskopf beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Eine Wendevorrichtung dient dem Wenden einer Schmelze in einem Schmelzekanal des erfindungsgemässen Blaskopfes. Hierfür weist die Wendevorrichtung einen Schmelzeeingang und einen Schmelzeausgang auf, wobei zwischen dem Schmelzeeingang und dem Schmelzeausgang zumindest ein Schmelzeführungsmittel angeordnet ist. Das Schmelzeführungsmittel dient einem Umschichten von Schmelze aus der Mitte des Schmelzeeingangs an den Rand des Schmelzeausgangs. Weiter ist das Schmelzeführungsmittel ausgebildet für ein Umschichten von Schmelze vom Rand des Schmelzeeingangs in die Mitte des Schmelzeausgangs.

Unter der Mitte des Schmelzekanals ist dabei grundsätzlich jeder Bereich zu verstehen, der vom Rand beabstandet ist. Insbesondere erfolgt also ein Umschichten vom Rand weg. Beispielsweise kann die Mitte des Schmelzeausgangs der gesamte Schmelzeausgangsbereich mit einem Abstand von ca. 5mm zum Rand sein.

Durch die Wendevorrichtung erfolgt also automatisch ohne bewegbare Teile durch eine aktive Führung mithilfe der Schmelzeführungsmittel ein Umschichten der Schmelze im Schmelzekanal. Die Wendevorrichtung kann in den Schmelzekanal eingesetzt werden oder einen Teil des Schmelzekanals ausbilden. Über den Schmelzeeingang ist eine fluidkommunizierende Verbindung zum Schmelzekanal hergestellt, so dass die Schmelze über den Schmelzeeingang in die Wendevorrichtung einströmen kann. Nachdem der Schmelzeeingang passiert ist, wird die Schmelze über die Schmelzeführungsmittel in erfindungsgemäßer Weise umgeschichtet. Am Schmelzeausgang wird die umgeschichtete Schmelze die Wendevorrichtung wieder verlassen und über die fluidkommunizierende Verbindung im Schmelzekanal weiterströmen.

Erfindungsgemäß sind die Schmelzeführungsmittel ausgebildet für das Umschichten der Schmelze. Dabei werden zwei grundsätzliche Schichtfunktionalitäten zur Verfügung gestellt. Zum einen wird am Schmelzeeingang die Schmelze aus der Mitte verwendet und an den Rand des Schmelzeausgangs geführt. Gleichzeitig und über die gleiche Länge erfolgt ein Umschichten der Schmelze vom Rand des Schmelzeeingangs in die Mitte des Schmelzeausgangs. Somit wird das Material aus der Mitte am Schmelzeeingang mit dem Material am Rand des Schmelzeeingangs vertauscht, so dass am Schmelzeausgang eine komplett umgeschichtete Schmelzeschichtsituation vorliegt.

Die Wendevorrichtung reduziert nun die Spülzeit beim Einsatz in einer Extrusionsvorrichtung erheblich. So ist in einer Spülsituation in der Extrusionsvorrichtung davon auszugehen, dass altes Schmelzematerial im Bereich des Randes des Schmelzekanals länger verbleibt als in der Mitte. So wird während des Spülvorgangs relativ zügig die Mitte des Schmelzekanals mit komplett frischem und damit neuem Schmelzematerial ausgefüllt sein, während am Rand immer noch ein hoher Anteil altes Material haften bleibt. Durch den Einsatz der Wendevorrichtung erfolgt nun ein Umschichten dieses alten Materials vom Rand des Schmelzekanals in die Mitte des Schmelzekanals und damit in den Bereich der schnellen bzw. höheren Durchströmungsquote. Dies führt dazu, dass sozusagen altes Schmelzematerial vor der Wendevorrichtung in die Mitte des Schmelzekanals nach der Wendevorrichtung umgeschichtet wird, so dass es nun in der Mitte schneller abtransportiert werden kann. Dadurch, dass dieses Umschichten in erfindungsgemäßer Weise erfolgt, kann eine deutliche Reduktion der Spülzeit durch ein schnelleres Ausbringen des alten Materials aus dem Schmelzekanal erzielt werden.

Insbesondere kann durch die Wendevorrichtung eine Reduktion um bis zu 50 % der gesamten Spülzeit erhalten werden. Ein weiterer Vorteil ist die Reduktion der Verweildauer der Schmelze am Rand auch im normalen Betrieb. Auf diese Weise lässt sich die thermische Beeinflussung auf das Material reduzieren wodurch Materialbeeinträchtigungen reduziert oder sogar vermieden werden.

Die Wendevorrichtung kann dabei in dem Schmelzekanal eingesetzt sein oder den Schmelzekanal ausbilden. Selbstverständlich können auch in einem Schmelzekanal zwei oder mehr Wendevorrichtungen mit definiertem Abstand vorgesehen sein. Bevorzugt ist es, wie es später noch näher erläutert wird, wenn die Wendevorrichtung sich bezogen auf die Länge des Schmelzekanals im Wesentlichen mittig angeordnet in diesem befindet.

Die Schmelzeführung mithilfe der Schmelzeführungsmittel kann dabei in unterschiedlichster Weise ausgestaltet sein. So können die später noch erläuterten Funktionen in einer Aufteilung genauso durch ein Schmelzeführungsmittel zur Verfügung gestellt werden, wie dies durch aktive Führungskanäle innerhalb des Schmelzekanals denkbar ist. Diese beiden unterschiedlichen Wendefunktionalitäten werden nachfolgend näher erläutert.

So kann es von Vorteil sein, wenn bei der Wendevorrichtung das zumindest eine Schmelzeführungsmittel einen ersten Führungskanal mit einer Führungsöffnung in der Mitte des Schmelzeeingangs und wenigstens einem Führungsausgang am Rand des Schmelzeausgangs aufweist. Hier erfolgt also ein aktives Wenden innerhalb eines einzigen Schmelzekanals, so dass auch ein Einbau einer separaten Wendevorrichtung in eine bestehende Geometrie eines Schmelzekanals denkbar wird. Durch das Aufnehmen in der Führungsöffnung wird nun das neue bzw. frische Material der Schmelze an den Rand geführt und dort über den Führungsausgang am Schmelzeausgang ausgegeben. Dort verdrängt es nun das dort befindliche alte Material in die Mitte, so dass durch ein passives Verschieben hier ein komplettes Umschichten erzielbar wird. Selbstverständlich kann jedoch auch eine Bewegung des alten Materials vom Rand in die Mitte aktiv erfolgen, wie dies durch einen zweiten Führungskanal im nachfolgenden Absatz näher erläutert wird. Unter einem Führungskanal kann ein vollständig geschlossener Kanal verstanden werden. Jedoch sind auch seitlich teilweise geöffnete Führungskanäle in Form von sogenannten Rutschen oder Rampen im Sinne der vorliegenden Erfindung als Führungskanal zu verstehen. Dementsprechend kann auch die Führungsöffnung und der Führungsausgang jeweils eine komplett umrandete Geometrie aufweisen oder mit einer seitlichen Öffnung versehen sein.

Ein weiterer Vorteil kann es sein, wenn bei der Wendevorrichtung gemäß dem voranstehenden Absatz das zumindest eine Schmelzeführungsmittel einen zweiten Führungskanal aufweist mit einem Führungsausgang in der Mitte des Schmelzeausgangs und wenigstens einer Führungsöffnung am Rand des Schmelzeeingangs. Damit dient der zweite Führungskanal sozusagen zur umgekehrten Funktionalität wie der erste Führungskanal. Über die Führungsöffnung kann nun Schmelze und damit altes Material der Schmelze vom Rand am Schmelzeeingang aufgenommen und aktiv mit dem zweiten Führungskanal in die Mitte über den Führungsausgang am Schmelzeausgang geführt werden. Damit wird nicht nur durch Verdrängen, sondern durch aktives Führen und Umschichten die entsprechende erfindungsgemäße Umschichtung vom Rand zur Mitte und von der Mitte zum Rand möglich. Die Kombination von zwei Führungskanälen ist dabei vorzugsweise parallel vorgesehen, so dass die Führungsöffnung des ersten Führungskanals und die Führungsöffnung des zweiten Führungskanals in Strömungsrichtung an gleicher oder im Wesentlichen gleicher Stelle der Wendevorrichtung angeordnet sind. Gleichzeitig ist es vorteilhaft, wenn auch der Führungsausgang des ersten Führungskanals und der Führungsausganges des zweiten Führungskanals in Bezug auf die Strömungsrichtung an gleicher oder im Wesentlichen gleicher Position am Schmelzeausgang angeordnet sind. Ebenfalls vorteilhaft ist es, wenn alle Führungskanäle des zumindest einen Schmelzeführungsmittels den gleichen oder im Wesentlichen gleichen freien Strömungsquerschnitt aufweisen, um eine saubere Umschichtung, insbesondere mit definierten Volumenströmen gewährleisten zu können. Dabei sind die einzelnen Strömungsquerschnitte vorzugsweise ausgebildet gleiche oder im Wesentlichen gleiche Strömungsgeschwindigkeiten zur Verfügung stellen zu können. Damit wird ein unerwünschtes Abreißen einzelner Schichten voneinander mit hoher Wahrscheinlichkeit und damit mit großer Sicherheit vermieden.

Vorteilhaft ist es weiter, wenn bei der Wendevorrichtung das zumindest eine Schmelzeführungsmittel einen Teilungsabschnitt mit einem ersten Teilkanal und einem zweiten Teilkanal aufweist. Dabei ist vor dem Teilungsabschnitt ein Aufteilungsabschnitt zum Aufteilen der Schmelze auf Teilkanäle und nach dem Teilungsabschnitt ein Kombinationsabschnitt zum Zusammenführen der Schmelze aus den Teilkanälen angeordnet. Diese Ausführung eines Schmelzeführungsmittels ist selbstverständlich grundsätzlich kombinierbar mit den Schmelzeführungsmitteln der beiden voranstehenden Absätze. Durch diese Teilungsfunktion kann ebenfalls ein Umschichten erfolgen. So wird über einen Aufteilungsabschnitt die Menge der Schmelze in die beiden Teilkanäle aufgeteilt. Dies gilt selbstverständlich auch für die Randschicht der Schmelze, so dass in den beiden Teilkanälen nur ein Teil des Randes, nämlich insbesondere die Hälfte des Randes mit altem Material versehen ist, während im Bereich des Aufteilungsabschnittes die andere Hälfte des Randes bereits mit frischem Material versehen ist. Wird nun der Kombinationsabschnitt zum Zusammenführen der Schmelze aus den Teilkanälen in entsprechender Weise geometrisch ausgerichtet, so führt dies dazu, dass zumindest ein Teil der Randschicht mit neuem Material auch beim Kombinieren der Teilströme der Schmelze erhalten bleibt. Somit kann durch die Funktionalität des Aufteilens und des Kombinierens ebenfalls eine Möglichkeit einer erfindungsgemäßen Umschichtung gewährleistet werden. Insbesondere wird eine solche teilweise erfolgte Umschichtung mit einem entsprechenden Teilungsabschnitt mit Führungskanälen kombiniert, wie sie in den voranstehenden Absätzen erläutert worden sind.

Die Wendevorrichtung gemäß dem voranstehenden Absatz lässt sich dahingehend weiterbilden, dass der Kombinationsabschnitt ausgebildet ist für ein mittiges Zusammenführen der Randabschnitte der Schmelze. Darunter ist zu verstehen, dass eine explizite geometrische Ausrichtung der einzelnen Teilkanäle im Kombinationsabschnitt vorliegt. Befinden sich beispielsweise nach dem Aufteilungsabschnitt die Randabschnitte mit altem Material der Schmelze an der Außenseite des jeweiligen Teilkanals, so können die beiden Teilkanäle in dem Kombinationsabschnitt derart zusammengeführt werden, dass nun die beiden Randabschnitte der Schmelze in den Teilkanälen mit altem Material mittig zusammengeführt werden. Damit erfolgt eine Rekombination der Teilströme der Schmelze unter einer kompletten oder im Wesentlichen kompletten Umschichtung, so dass nunmehr durch geschicktes Rekombinieren der Teilströme sich die Randschicht vor dem Schmelzeeingang in die Mitte am Schmelzeausgang verlagert hat. Gleichzeitig wurde neues Material aus der Mitte vom Schmelzeausgang in die Randschichten und damit an den Rand am Schmelzeausgang verlagert. Dabei wird vorzugsweise der jeweilige Durchmesser der Teilkanäle an den Durchmesser vor dem Aufteilabschnitt und nach dem Kombinationsabschnitt angepasst.

Erfindungsgemäß weist der Blaskopf eine Verschiebevorrichtung zum Verschieben der Wendevorrichtung zwischen einer ersten Position und einer zweiten Position auf. In der ersten Position befinden sich der Schmelzeeingang und der Schmelzeausgang in fluidkommunizierender Verbindung mit dem Schmelzekanal. In der zweiten Position sind der Schmelzeeingang und der Schmelzeausgang von dem Schmelzekanal getrennt. Damit kann die Verschiebevorrichtung zum Beispiel translatorisch, rotatorisch oder in kombinierter Weise eine Bewegung der Wendevorrichtung durchführen. Insbesondere wird dabei für die Wendevorrichtung in der zweiten Position ein Rohrstück bzw. ein Kanalstück vorgesehen, welches die beiden verbleibenden Endabschnitte des Schmelzekanals fluidkommunizierend miteinander verbindet. Die Verschiebevorrichtung erlaubt es also, die Umschichtfunktion sozusagen durch das Einschieben der Wendevorrichtung einzuschalten und durch das Ausschieben der Wendevorrichtung auszuschalten. Da die Wendevorrichtung durch ihre Wendefunktionalität eine entsprechende Druckverlustsituation erzeugt, ist es vorteilhaft, im normalen Betrieb diese Wendefunktion auszuschalten. Damit wird der erhöhte Druckverlust ausschließlich während des Spülvorgangs eingesetzt, um die entsprechende Umschichtfunktion zu gewährleisten. Der erhöhte Druckverlust der Wendevorrichtung wird durch das Herausschieben der Wendevorrichtung in die zweite Position im Normalbetrieb ausgeschaltet und kann dementsprechend nicht mehr weiter stören.

Es kann weiter von Vorteil sein, wenn bei dem erfindungsgemäßen Blaskopf die Verschiebevorrichtung ein Schmelzekanalstück aufweist mit einer Länge, welche der Strecke zwischen dem Schmelzeeingang und dem Schmelzeausgang entspricht oder im Wesentlichen entspricht. Ein Schmelzekanalstück kann also bei Verschieben aus der ersten Position in die zweite Position an die Stelle geschoben werden, an welcher zuvor die Wendevorrichtung angeordnet war. Mit anderen Worten ersetzt das Schmelzekanalstück die Wendevorrichtung im restlichen Schmelzekanal und komplettiert diesen dadurch. Dies erlaubt es, für den normalen Betrieb einen im Wesentlichen ununterbrochenen fortlaufenden Schmelzekanal zur Verfügung zu stellen. Für den Spülsituationsfall wird nun einfach über die Verschiebevorrichtung das Schmelzekanalstück wieder aus der fluidkommunizierenden Position im Schmelzekanal entfernt und an dessen Stelle die Wendevorrichtung geschoben. Dies kann sowohl manuell, als auch mittels der später noch beschriebenen Antriebsvorrichtung maschinell erfolgen. Der Vorteil dieser Ausführungsform liegt in der Kombination in der einzigen Verschiebevorrichtung. Insbesondere sind dabei das Schmelzekanalstück und auch auch die Wendevorrichtung und damit der Schmelzeeingang und der Schmelzeausgang mit parallelen oder im Wesentlichen parallelen Kanalachsen versehen.

Ein weiterer Vorteil kann es sein, wenn bei dem erfindungsgemäßen Blaskopf die Verschiebevorrichtung einen Führungsabschnitt aufweist für eine Führung der Verschiebebewegung zwischen der ersten Position und der zweiten Position. Darunter können eine Kulissenführung oder kontraktierende Gleitflächen verstanden werden. Auch andere Lösungen sind aus technischer Sicht für den Führungsabschnitt denkbar. Durch den Führungsabschnitt bzw. durch eine Mehrzahl von Führungsabschnitten wird die Bewegungsrichtung und die Bewegungsstrecke für die Verschiebevorrichtung und damit für die Wendevorrichtung festgelegt. Selbstverständlich kann der Führungsabschnitt auch entsprechende Anschläge aufweisen, um die Endpositionen für die erste Position und die zweite Position exakt zu definieren. Ein Führungsabschnitt kann dabei hinsichtlich der Bewegungsrichtung insbesondere eine lineare oder im Wesentlichen lineare Verschiebebewegung zur Verfügung stellen. Jedoch sind grundsätzlich auch gekrümmte Translationsbewegungen oder sogar Rotationsbewegungen im Sinne der vorliegenden Erfindung denkbar.

Vorteilhaft ist es weiter, wenn bei dem erfindungsgemäßen Blaskopf die Verschiebevorrichtung ausgebildet ist für ein Verschieben der Wendevorrichtung zwischen der ersten Position und der zweiten Position entlang einer Translationsstrecke, insbesondere entlang einer Geraden. Eine Translation ist insbesondere hinsichtlich der Ausführung einer Führungsfunktionalität besonders einfach, kompakt und kostengünstig ausbildbar. Die Translation, insbesondere entlang einer Geraden, erlaubt darüber hinaus eine besonders kurze Verschiebestrecke und damit ein schnelles Umschalten zwischen der Umschichtfunktion und der normalen Betriebssituation. Wird für die Verschiebebewegung in der Verschiebevorrichtung eine Antriebsvorrichtung vorgesehen, so kann eine Bewegung entlang einer Translationsstrecke, insbesondere entlang einer Geraden, ohne das Dazwischenschalten eines Getriebes erfolgen. Insbesondere handelt es sich bei einer derartigen Antriebsvorrichtung um einen Linearantrieb, welcher ebenfalls kostengünstig, platzsparend und einfach einsetzbar ist.

Ein weiterer Vorteil kann es sein, wenn bei dem erfindungsgemäßen Blaskopf die Verschiebevorrichtung eine Antriebsvorrichtung, insbesondere in Form eines Elektromotors, aufweist für die Durchführung des Verschiebens zwischen der ersten Position und der zweiten Position. Dabei handelt es sich insbesondere um eine reversible Verschiebemöglichkeit, so dass zwischen den beiden Positionen im Wesentlichen frei in beiden Richtungen der Verschiebevorgang durchgeführt werden kann. Die Antriebsvorrichtung ist dabei insbesondere als Linearantrieb ausgebildet, um eine Translationsstrecke, insbesondere entlang einer Geraden, für die Verschiebevorrichtung zur Verfügung stellen zu können. Die Regelung dieser Antriebsvorrichtung ist vorzugsweise mit der Regelung des Blaskopfs verbunden, um den exakten Druckverlust als Information der Regelung des Blaskopfs zur Verfügung stellen zu können. So kann automatisch beim Umschalten auf die Spülsituation diese Information in der Verschiebevorrichtung zu der entsprechenden Verschiebebewegung führen.

Vorteilhaft ist es weiter, wenn bei dem erfindungsgemäßen Blaskopf der Schmelzeeingang und der Schmelzeausgang einen freien Strömungsquerschnitt aufweisen, welcher dem freien Strömungsquerschnitt des Schmelzekanals entspricht oder im Wesentlichen entspricht. Mit anderen Worten wird stufenlos und ohne Kante oder Durchmesservariation eine fluidkommunizierende Verbindung zwischen Schmelzeeingang und Schmelzekanal bzw. zwischen Schmelzeausgang und Schmelzekanal möglich. Eine solche Wendevorrichtung kann komplett in den Schmelzekanal eingesetzt werden bzw. den Schmelzekanal sogar teilweise ausbilden. Unter einem freien Strömungsquerschnitt ist dabei der Querschnitt senkrecht zur Strömung an der jeweiligen Position zu verstehen. Mit anderen Worten bildet der freie Strömungsquerschnitt die Strömungsquerschnittsfläche aus, über welche der Volumenstrom der Schmelze strömen kann.

Vorteilhaft ist es weiter, wenn bei dem erfindungsgemäßen Blaskopf der freie Strömungsquerschnitt das Schmelzeführungsmittel dem freien Strömungsquerschnitt des Schmelzeeingangs und/oder dem freien Strömungsquerschnitt des Schmelzeausgangs entspricht oder im Wesentlichen entspricht. Insbesondere ist diese Ausführungsform kombiniert mit der Ausführungsform gemäß dem voranstehenden Absatz. Der Strömungsquerschnitt der Schmelzeführungsmittel ist dabei vorzugsweise die Summe sämtlicher Schmelzeführungsmittel. Durch dieses Entsprechen wird also ein konstanter freier Strömungsquerschnitt zur Verfügung gestellt, so dass der Druckverlust durch Querschnittseinengungen vermieden oder im Wesentlichen vermieden wird. Dies reduziert den sich einstellenden Druckverlust beim Durchströmen mit Schmelze deutlich. Es verbleibt ausschließlich oder im Wesentlichen ausschließlich ein Druckverlust, welcher durch die entsprechende Einwirkung auf die Strömungsrichtung und damit einhergehend durch das aktive Umschichten der Schmelze erzeugt wird. So kann beispielsweise eine Aufweitung des Schmelzekanals eine solche geometrische Korrelation im Bereich der Wendevorrichtung erlauben. Auch ist es denkbar, dass beim Aufteilen in einem Teilungsabschnitt eine entsprechende Anpassung der Strömungsquerschnitte durch die entsprechende Durchmesser der Teilkanäle zur Verfügung gestellt werden.

Insbesondere ist ein solcher Blaskopf mit zwei oder mehr Schmelzekanälen für unterschiedliche Schichten der Blasfolie vorgesehen. Die Wendevorrichtung ist vorzugsweise in gleicher oder identischer Ausgestaltung in sämtlichen Schmelzekanälen angeordnet, um für alle Schmelzekanäle die gleiche Spülzeitreduktion in erfindungsgemäßer Weise zur Verfügung stellen zu können.
Ein Blaskopf gemäß dem voranstehenden Absatz lässt sich dahingehend weiterbilden, dass die Wendevorrichtung bezogen auf die Länge des Schmelzekanals in der Mitte oder im Wesentlichen in der Mitte des Schmelzekanals angeordnet ist. Dabei handelt es sich um eine optimierte Positionierung der Wendevorrichtung, welche die maximale Reduktion der Spülzeit um ca. 50 % erlaubt. Selbstverständlich sind auch zwei oder mehr Wendevorrichtungen möglich, welche vorzugsweise mit gleicher bzw. identischer Teilung in dem jeweiligen Schmelzekanal eingesetzt sind.

Bei einem erfindungsgemäßen Blaskopf kann es vorteilhaft sein, wenn eine Verschiebevorrichtung mit zumindest zwei Wendevorrichtungen vorgesehen ist für ein gemeinsames Verschieben der zwei Wendevorrichtungen, zwischen einer ersten Position, in welcher die erste Wendevorrichtung sich in fluidkommunizierender Kommunikation mit dem Schmelzekanal befindet, und einer zweiten Position, in welcher die zweite Wendevorrichtung sich in fluidkommunizierender Kommunikation mit dem Schmelzekanal befindet. Dies erlaubt es, insgesamt drei unterschiedliche Positionen mit der Verschiebevorrichtung einzunehmen. Neben der Standardbetriebssituation, in welcher vorzugsweise ein Schmelzekanalstück eine entsprechende Komplettierung des Schmelzekanals erlaubt, sind nun zwei Positionen mit im Einsatz befindlichen Wendevorrichtungen denkbar. Die einzelnen Wendevorrichtungen unterscheiden sich dabei hinsichtlich ihrer Umschichtfunktionalität voneinander, so dass ein unterschiedlicher Druckverlust bzw. eine unterschiedliche geometrische Einwirkung auf die Strömungsverhältnisse in der jeweiligen Wendevorrichtung spezifisch erzielbar ist. So kann je nach Betriebssituation im Spülvorgang und insbesondere auch abhängig von dem tatsächlich eingesetzten Schmelzematerial und dessen Viskosität eine entsprechend angepasste Wendevorrichtung ausgewählt werden. Selbstverständlich können auch mehr als zwei Wendevorrichtungen in dieser Weise eingesetzt werden. Dies ermöglicht es, über die Anpassung die Spülleistung noch weiter zu verbessern und insbesondere eine unerwünschte Überlastung der Pumpvorrichtung zu vermeiden.

Bei einem erfindungsgemäßen Blaskopf ist es auch denkbar, dass bei einer Kombination von zwei oder mehr Wendevorrichtungen hintereinander jede Wendevorrichtung nur einen Teil des jeweiligen Randes abdeckt und damit nur von diesem Teil des Randes die Schmelze in die Mitte umschichtet. Dabei kann vorzugsweise jede Wendevorrichtung die Umschichtung für einen anderen Umfangsabschnitt durchführen, so dass nach dem passieren aller Wendevorrichtungen Schmelze vom vollumfänglichen Rand in die Mitte umgeschichtet worden ist. Beispielsweise können vier Wendevorrichtungen hintereinander jeweils 90° Umfang des Randes mit der Umschichtfunktion abdecken, so dass in Summe der gesamte Umfang von 360° umgeschichtet wird.

Ein weiterer Gegenstand der vorliegenden Erfindung ist ein Verfahren für die Durchführung eines Spülvorgangs in einem Blaskopf gemäß der vorliegenden Erfindung, aufweisend die Verfahrensschritte gemäß dem Anspruch 10.

Das erfindungsgemäße Verfahren bringt die gleiche erfindungsgemäße Funktionalität wie der erfindungsgemäße Blaskopf mit sich, so dass auch die gleichen Vorteile erzielt werden.

Das erfindungsgemäße Verfahren sieht vor, dass vor dem Durchführen des Spülvorgangs mittels der Verschiebevorrichtung die Wendevorrichtung in eine fluidkommunizierende Position mit dem Schmelzekanal verschoben wird. Mit anderen Worten kann nun die Umschichtfunktionalität eingeschaltet werden, indem vor der Durchführung des Spülvorgangs die Verschiebebewegung innerhalb der Verschiebevorrichtung durchgeführt wird. Damit kann das Umschalten zwischen unterschiedlichen Druckverlustsituationen zwischen entsprechend der Einsatzsituation und der Spülsituation kostengünstig, einfach und effektiv erfolgen.

Ebenfalls von Vorteil ist es, wenn bei einem erfindungsgemäßen Verfahren nach dem Durchführen des Spülvorgangs mittels einer Verschiebevorrichtung die Wendevorrichtung in eine Position verschoben wird, ohne fluidkommunizierende Verbindung mit dem Schmelzekanal. Hierbei handelt es sich sozusagen um das Ausschalten der Umschichtfunktion, so dass insbesondere ein Schmelzekanalstück anstelle der Wendevorrichtung den Schmelzekanal komplettiert. Auch dies erlaubt es kostengünstig und einfach zwischen der Umschichtfunktionalität in der Spülsituation und der Normalsituation beim Einsatz des Blaskopfes umzuschalten.

Selbstverständlich kann ein erfindungsgemäßer Blaskopf auch in anderen Extrusionsanlagen, zum Beispiel in einer Folienextrusion, insbesondere in einer Flachfolienextrusion eingesetzt werden. Damit kann der Blaskopf grundsätzlich als Extrusionskopf ausgebildet sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine schematische Darstellung während eines Spülvorgangs bei bekannten Extrusionsvorrichtungen,
- Fig. 2: die Situation gemäß Fig. 1 beim Einsatz einer Wendevorrichtung,
- Fig. 3: eine Ausführungsform einer Wendevorrichtung,
- Fig. 4: die Ausführungsform der Fig. 3 mit weiterer Darstellung von Strömungsverhältnissen der Schmelze,
- Fig. 5: eine weitere Ausführungsform einer Wendevorrichtung,
- Fig. 6: eine schematische Darstellung der Wirkung einer Wendevorrichtung,
- Fig. 7: eine weitere Ausführungsform einer Wendevorrichtung,
- Fig. 8: eine weitere Ausführungsform einer Wendevorrichtung,
- Fig. 9: eine Ausführungsform eines erfindungsgemäßen Blaskopfs, und
- Fig. 10: eine weitere Ausführungsform eines erfindungsgemäßen Blaskopfes.

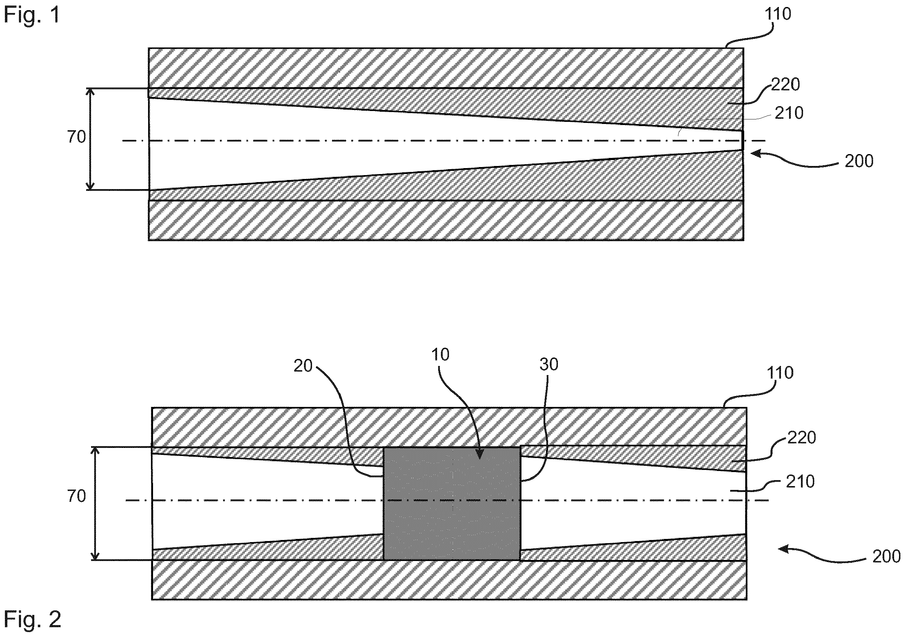

In Fig. 1 ist ein Schmelzekanal 110 mit einer Strömungsrichtung von links nach rechts dargestellt, wie er sich während des Spülvorgangs darstellt. Innerhalb des Schmelzekanals 110 ist ein freier Strömungsquerschnitt 70 vorgesehen, durch welchen Schmelze 200 strömt. Hier ist zu unterscheiden zwischen altem Schmelzematerial 220 und neuem Schmelzematerial 210. Hier ist gut zu erkennen, dass über den länglichen Verlauf des Schmelzekanals 110 während des Spülverlaufs sich eine rampenförmige bzw. konusförmige Ausbildung zwischen dem alten Schmelzematerial 220 und dem neuen Schmelzematerial 210 ausbildet. Dieser Konus wandert während der Spülzeit im Verlauf nach rechts, bis letztendlich der größte Teil des alten Schmelzematerials 220 ausgebracht worden ist und mit der aktiven Produktion weiter verfahren werden kann.

In Fig. 2 ist die Wirkungsweise einer Wendevorrichtung 10 dargestellt. Hier erfolgt nun ein Umschichten vom Rand der Schmelze 200 in die Mitte der Schmelze 200 und umgekehrt. Am Schmelzeeingang 20 der Wendevorrichtung 10 wird dementsprechend Material vom Rand der Schmelze 200 aufgenommen und in die Mitte am Schmelzeausgang 30 bereitgestellt. In umgekehrter Weise wird frisches bzw. neues Schmelzematerial 210 aus der Mitte am Schmelzeeingang 20 an den Rand des Schmelzeausgangs 30 geführt. Wie gut zu erkennen ist, reduziert sich damit die sich einstellende Menge an altem Schmelzematerial 220 am rechten Ende des Schmelzekanals 110. Die Darstellung der Fig. 2 ist zum gleichen Zeitpunkt während des Spülvorgangs erfolgt, wie bei Fig. 1.

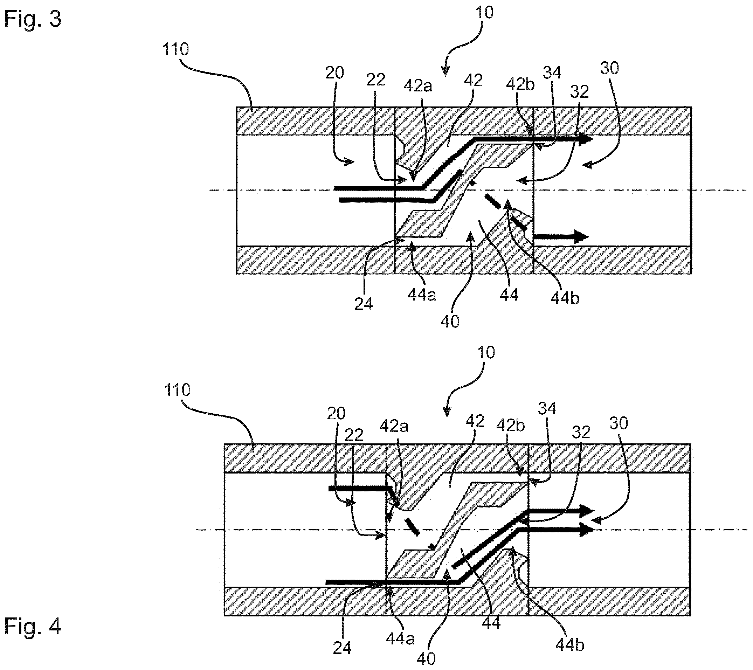

Die Fig. 3 und 4 zeigen eine erste Ausführungsform Wendevorrichtung 10. Diese Wendevorrichtung 10 ist mit zwei Führungskanälen 42 und 44 als Schmelzeführungsmittel 40 ausgestattet. Über einen nicht näher erläuterten Ringsammler wird eine Führungsöffnung 44a am Rand 24 des Schmelzeeingangs 20 zur Verfügung gestellt, so dass entsprechende Schmelze 200 dort in den zweiten Führungskanal 44 einströmen kann. Dies ist mit den Pfeilen in Fig. 4 dargestellt. Über einen Führungsausgang 44b in der Mitte 32 des Schmelzeausgangs 30 erfolgt nun die Umschichtung vom Rand in die Mitte für dieses Material der Schmelze 200.

In gleicher Weise ist in der Mitte 22 des Schmelzeeingangs 20 eine Führungsöffnung 42a des ersten Führungskanals 42 vorgesehen, welcher es ermöglicht entlang der Pfeile der Fig. 3 die Schmelze 200 an den Rand 34 des Schmelzeausgangs 30 und den entsprechenden Führungsausgang 42b umzuschichten. Hier handelt es sich um eine technische Lösung mittels eines aktiven Umschichtens, wobei die Wendevorrichtung 10 Bestandteil des Schmelzekanals 110 ist.

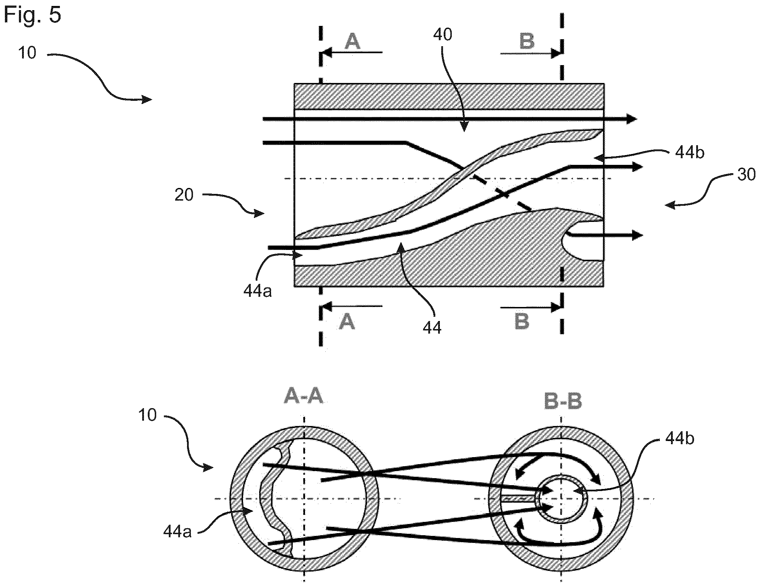

Die Fig. 5 zeigt eine reduzierte Komplexität hinsichtlich der Ausführungsformen der Fig. 3 und 4. Hier ist nur ein abgeschlossener zweiter Führungskanal 40 mit entsprechender Führungsöffnung 44a und Führungsausgang 44b vorgesehen. Das übrige Material der Schmelze 200 wird vom Schmelzeeingang 20 entweder unberührt am oberen Ende durch die Schmelzeführungsmittel 40 hindurchgeführt bzw. an den unteren Rand geleitet. Die entsprechenden Schnitte A-A und B-B sind im unteren Bereich der Fig. 5 dargestellt, wobei dort ebenfalls die Pfeillinien die entsprechende Umschichtungsbewegung darstellen.

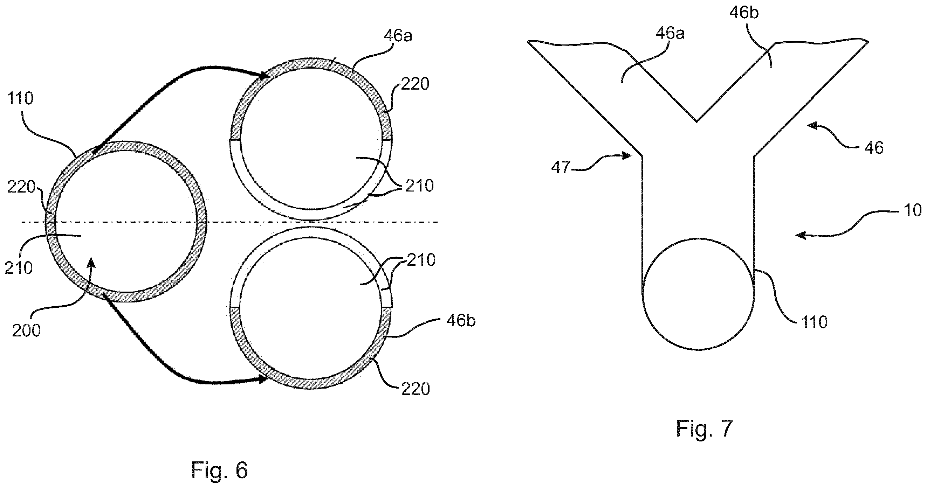

Die Fig. 6 und 7 zeigen die Möglichkeit, ein Umschichten durch eine Teilungsfunktionalität zur Verfügung zu stellen. Ausgehend von einem Schmelzekanal 110 gemäß Fig. 7 wird über einen Aufteilungsabschnitt 47 eine Aufteilung der Schmelze 200 auf zwei Teilkanäle 46a und 46b des Teilungsabschnittes 46 erfolgen. Dies führt schematisch zu einer Verteilung gemäß der Fig. 6. Während ausgehend vom Schmelzekanal 110 komplett umfänglich altes Schmelzematerial 220 das neue Schmelzematerial 210 umgibt, wird durch das Aufteilen in den Teilkanälen 46a und 46b nur noch ungefähr die Hälfte des Umfangs mit altem Schmelzematerial 220 bedeckt sein. Die andere Hälfte in den Teilkanälen 46a und 46b ist am Rand mit bereits neuem Schmelzematerial 210 versehen. Wird nun durch geschicktes Kombinieren ein mittiges Zusammenführen der beiden Teilkanäle 46 für die Randbereiche mit dem alten Schmelzematerial 220 durchgeführt, so kann ebenfalls ein komplettes oder zumindest teilweises Umschichten durch diese Teilungsfunktion erfolgen.

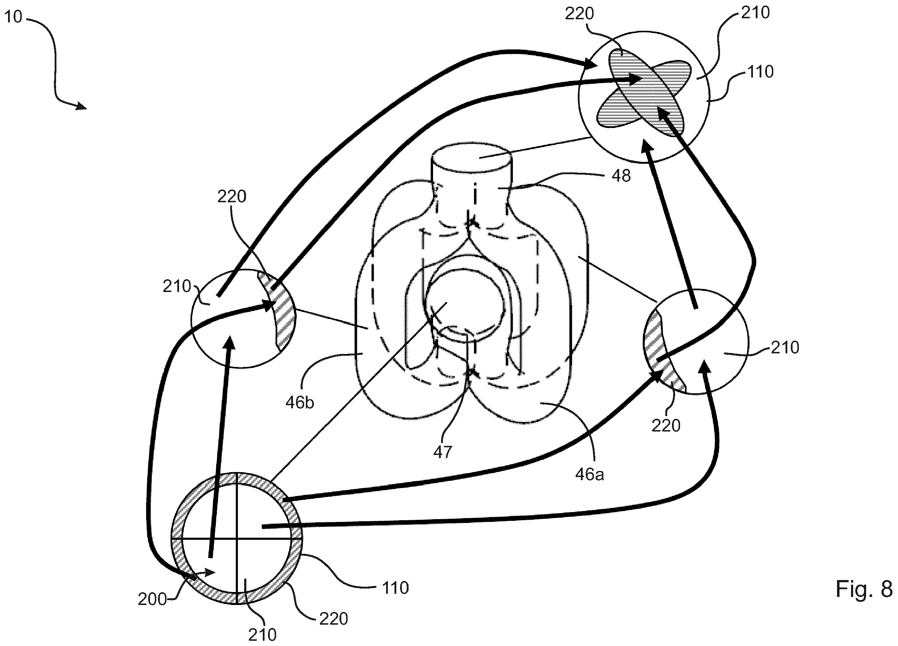

Die Fig. 8 zeigt schematisch eine mögliche weitere Ausführungsform einer Wendevorrichtung 10 mit dieser Teilungsfunktionalität. Hier erfolgt ein Aufteilen auf insgesamt vier Teilkanäle 46a und 46b und ein Rekombinieren in einem Kombinationsabschnitt 48. Schematisch ist darüber hinaus die entsprechende Verteilung von altem Schmelzematerial 220 und neuem Schmelzematerial 210 in den entsprechenden Kanälen dargestellt. Nach dem Kombinieren bzw. Zusammenführen am Kombinationsabschnitt 48 befinden sich die Randabschnitte mit dem alten Material 220 komplett mittig, so dass der Umgebungsrand im Schmelzekanal 110 im Wesentlichen vollständig durch das neue Schmelzematerial 210 ausgebildet ist.

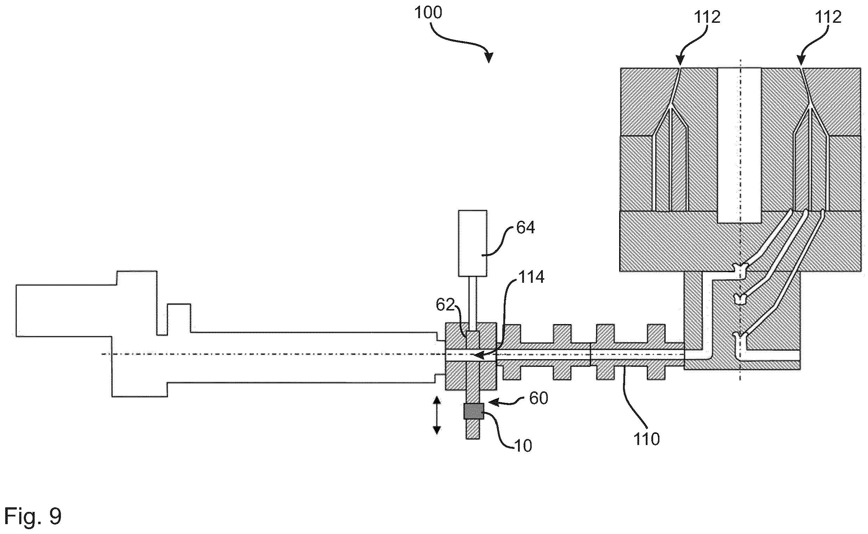

In Fig. 9 ist dargestellt, wie in einem Schmelzekanal 110 in einem Blaskopf 100 eine Wendevorrichtung 10 angeordnet sein kann. Dabei kann es sich hier um jede der beschriebenen Ausführungsformen der Wendevorrichtung 10 handeln. Dabei weist die Wendevorrichtung 10 eine Verschiebevorrichtung 60 auf. Gemäß der Fig. 9 befindet sich die Wendevorrichtung 10 in der zweiten Position, und damit außer fluidkommunizierendem Eingriff mit dem Schmelzekanal 110. Hierbei handelt es sich um die Betriebsposition. Für die Spülsituation wird über die Verschiebevorrichtung 60 die Wendevorrichtung 10 in den Schmelzekanal 110 eingebracht und kann damit die erfindungsgemäße Funktionalität für die Reduktion der Spülzeit zur Verfügung stellen. Für die Bewegung des Verschiebens ist eine Antriebsvorrichtung 64 vorgesehen, welche hier einen Elektromotor aufweist. Das Verschieben erfolgt entlang einer Geraden und wird durch einen Führungsabschnitt 62 der Verschiebevorrichtung 62 geführt. Weiter ist in der Verschiebevorrichtung 60 ein Schmelzekanalstück 114 vorgesehen, welcher in der zweiten Position gemäß der Fig. 9 den Schmelzekanal 110 vervollständigt. Der Blaskopf dieser Ausführungsform ist mit einem ringförmigen Blasauslass 112 ausgestattet.

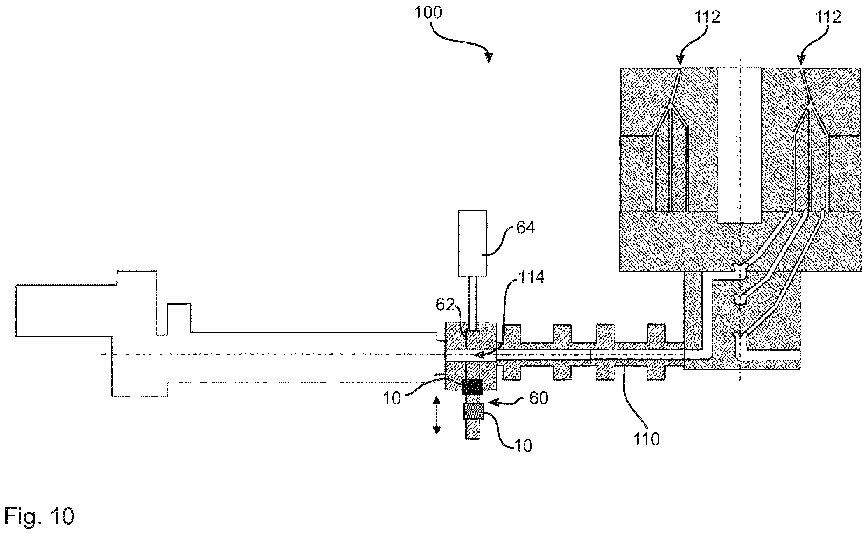

In der Fig. 10 ist eine Variation der Ausführungsform der Fig. 9 für einen Blaskopf 100 dargestellt. Hier ist die Verschiebevorrichtung mit zwei separaten und vor allem unterschiedlichen Wendevorrichtungen 10 ausgestattet. So kann nun hier die Verschiebevorrichtung insgesamt drei unterschiedliche Positionen einnehmen. Neben der Betriebsfunktion der Fig. 10 können zwei unterschiedliche Spülpositionen mit den unterschiedlichen Wendevorrichtungen 10 eingenommen werden, so das eine Anpassung an unterschiedliche Bedürfnisse bei dem Spülvorgang erfolgen kann.

### Bezugszeichenliste

- 10: Wendevorrichtung
- 20: Schmelzeeingang
- 22: Mitte des Schmelzeeingangs
- 24: Rand des Schmelzeeingangs
- 30: Schmelzeausgang
- 32: Mitte des Schmelzeausgangs
- 34: Rand des Schmelzeausgangs
- 40: Schmelzeführungsmittel
- 42: erster Führungskanal
- 42a: Führungsöffnung
- 42b: Führungsausgang
- 44: zweiter Führungskanal
- 44a: Führungsöffnung
- 44b: Führungsausgang
- 46: Teilungsabschnitt
- 46a: erster Teilkanal
- 46b: zweiter Teilkanal
- 47: Aufteilungsabschnitt
- 48: Kombinationsabschnitt
- 60: Verschiebevorrichtung
- 62: Führungsabschnitt
- 64: Antriebsvorrichtung
- 70: freier Strömungsquerschnitt

- 100: Blaskopf
- 110: Schmelzekanal
- 112: Blasausgang
- 114: Schmelzekanalstück
- 200: Schmelze
- 210: Neues Schmelzematerial
- 220: Altes Schmelzematerial

## Patentansprüche

1. Blaskopf (100) für das Durchführen eines Blasfolienextrusionsverfahrens, aufweisend zumindest einen Schmelzekanal (110) für die Förderung von Schmelze (200) zu einem Blasausgang (120) des Blaskopfes, wobei in dem zumindest einen Schmelzekanal (110) wenigstens eine Wendevorrichtung (10) für das Wenden einer Schmelze (200) in einem Schmelzekanal (110) angeordnet ist, aufweisend einen Schmelzeeingang (20) und einen Schmelzeausgang (30), wobei zwischen dem Schmelzeeingang (20) und dem Schmelzeausgang (30) zumindest ein Schmelzeführungsmittel (40) angeordnet ist für ein Umschichten von Schmelze (200) aus der Mitte (22) des Schmelzeeingangs (20) an den Rand (34) des Schmelzeausgangs (30) und für ein Umschichten von Schmelze (200) vom Rand (24) des Schmelzeeingangs (20) in die Mitte (32) des Schmelzeausgangs (30),
**dadurch gekennzeichnet, dass** der Blaskopf (100) eine Verschiebevorrichtung (60) aufweist, die zum Verschieben der Wendevorrichtung (10) zwischen einer ersten Position, in welcher der Schmelzeeingang (20) und der Schmelzeausgang (30) sich in fluidkommunizierender Verbindung mit dem Schmelzekanal (110) befinden, und einer zweiten Position, in welcher der Schmelzeeingang (20) und der Schmelzeausgang (30) von dem Schmelzekanal (110) getrennt sind, ausgebildet ist.

2. Blaskopf (100) nach Anspruch 1,
**dadurch gekennzeichnet, dass**
das zumindest eine Schmelzeführungsmittel (40) einen ersten Führungskanal (42) mit einer Führungsöffnung (42a) in der Mitte (22) des Schmelzeeingangs (20) und wenigstens einem Führungsausgang (42b) am Rand (34) des Schmelzeausgangs (30) aufweist und/oder das zumindest eine Schmelzeführungsmittel (40) einen zweiten Führungskanal (44) aufweist mit einem Führungsausgang (44b) in der Mitte (32) des Schmelzeausgangs (30) und wenigstens einer Führungsöffnung (44a) am Rand (24) des Schmelzeeingangs (20).

3. Blaskopf (100) nach einem der vorangegangenen Ansprüche,
**dadurch gekennzeichnet, dass**
das zumindest eine Schmelzeführungsmittel (40) einen Teilungsabschnitt (46) mit einem ersten Teilkanal (46a) und einem zweiten Teilkanal (46b) aufweist, wobei vor dem Teilungsabschnitt (46) ein Aufteilungsabschnitt (47) zum Aufteilen der Schmelze (200) auf die Teilkanäle (46a, 46b) und nach dem Teilungsabschnitt (46) ein Kombinationsabschnitt (48) zum Zusammenführen der Schmelze (200) aus den Teilkanälen (46a, 46b) angeordnet ist und/oder der Kombinationsabschnitt (48) ausgebildet ist für ein mittiges Zusammenführen der Randabschnitte der Schmelze (200).

4. Blaskopf (100) nach einem der vorangegangenen Ansprüche,
**dadurch gekennzeichnet, dass**
die Verschiebevorrichtung (60) ein Schmelzekanalstück (114) aufweist mit einer Länge, welche der Strecke zwischen dem Schmelzeeingang (20) und dem Schmelzeausgang (30) entspricht oder im Wesentlichen entspricht.

5. Blaskopf (100) nach einem der vorangegangenen Ansprüche,
**dadurch gekennzeichnet, dass**
die Verschiebevorrichtung (60) einen Führungsabschnitt (62) aufweist für eine Führung der Verschiebebewegung zwischen der ersten Position und der zweiten Position.

6. Blaskopf (100) nach einem der vorangegangenen Ansprüche,
**dadurch gekennzeichnet, dass**
die Verschiebevorrichtung (60) ausgebildet ist für ein Verschieben der Wendevorrichtung (10) zwischen der ersten Position und der zweiten Position entlang einer Translationsstrecke, insbesondere entlang einer Geraden.

7. Blaskopf (100) nach einem der vorangegangenen Ansprüche,
**dadurch gekennzeichnet, dass**
die Verschiebevorrichtung (60) eine Antriebsvorrichtung (64), insbesondere in Form eines Elektromotors, aufweist für die Durchführung des Verschiebens zwischen der ersten Position und der zweiten Position.

8. Blaskopf (100) nach einem der vorhergehenden Ansprüche,
**dadurch gekennzeichnet, dass**
die Wendevorrichtung (10) bezogen auf die Länge des Schmelzekanals (110) in der Mitte oder im Wesentlichen in der Mitte des Schmelzekanals (110) angeordnet ist.

9. Blaskopf (100) nach einem der vorhergehenden Ansprüche,
**dadurch gekennzeichnet, dass** die Verschiebevorrichtung (60) für zumindest zwei Wendevorrichtungen (10) ausgebildet ist, um ein gemeinsames Verschieben zweier Wendevorrichtungen (10), zwischen einer ersten Position, in welcher die erste Wendevorrichtung (10) sich in fluidkommunizierender Verbindung mit dem Schmelzekanal (110) befindet, und einer zweiten Position, in welcher die zweite Wendevorrichtung (10) sich in fluidkommunizierender Verbindung mit dem Schmelzekanal (10) befindet, zu ermöglichen.

10. Verfahren zur Durchführung eines Spülvorgangs in einem Blaskopf (110) mit den Merkmalen eines der Ansprüche 1 bis 9, aufweisend die folgenden Schritte:
- Verschieben der Wendevorrichtung (10) mittels der Verschiebevorrichtung (60) in eine Poisition mit fluidkommunizierender Verbindung mit dem Schmelzekanal (110),
- Einbringen einer Schmelze (200) in den Schmelzeeingang (20) der Wendevorrichtung (10),
- Umschichten von Schmelze (200) aus der Mitte (22) des Schmelzeeingangs (20) an den Rand (34) des Schmelzeausgangs (30) der Wendevorrichtung (10),
- Umschichten von Schmelze (200) vom Rand (24) des Schmelzeeingangs (20) in die Mitte (32) des Schmelzeausgangs (30) und
- Verschieben der Wendevorrichtung (10) mittels der Verschiebevorrichtung (60) in eine Position ohne fluidkommunizierende Verbindung mit dem Schmelzekanal (110).

## Claims

1. A blow head (100) for the implementation of a blown film extrusion process, having at least one melt channel (110) for conveying the molten material (200) to a blow outlet (120) of the blow head, wherein in at least one melt channel (110) at least one overturning device (10) for overturning a molten material (200) is arranged in a melt channel (110), having a melt inlet (20) and a melt outlet (30), wherein between the melt inlet (20) and the melt outlet (30) at least one melt guiding means (40) is arranged for moving molten material (200) from the center (22) of the melt inlet (20) to the edge (34) of the melt outlet (30) and for moving molten material (200) from the edge (24) of the melt inlet (20) to the center (32) of the melt outlet (30),
**characterized in that**
the blow head (100) has a displacement device (60), which is designed for the displacement of the overturning device (10) between a first position, in which the melt inlet (20) and the melt outlet (30) are located in fluid-communicating connection with the melt channel (110) and a second position, in which the melt inlet (20) and the melt outlet (30) are separated from the melt channel (110).

2. The blow head (100) according to Claim 1,
**characterized in that**
the at least one melt guiding means (40) has a first guide channel (42) with a guide opening (42a) in the center (22) of the melt inlet (20) and at least one guide outlet (42b) on the edge (34) of the melt outlet (30) and/or the at least one melt guiding means (40) has a second guide channel (44) with a guide outlet (44b) in the center (32) of the melt outlet (30) and at least one guide opening (44a) on the edge (24) of the melt inlet (20).

3. The blow head (100) according to any one of the preceding claims,
**characterized in that**
the at least one melt guiding means (40) has a dividing section (46) with a first sub-channel (46a) and a second sub-channel (46b), wherein a distribution section (47) for distributing the molten material (200) to the sub-channels (46a, 46b) is arranged upstream of the dividing section (46) and a combination section (48) for combining the molten material (200) from the sub-channels (46a, 46b) is arranged downstream of the dividing section (46) and/or the combination section (48) is designed for a central combining of the edge sections of the molten material (200).

4. The blow head (100) according to any one of the preceding claims,
**characterized in that**
the displacement device (60) has a melt channel piece (114) with a length, which corresponds or substantially corresponds to the distance between the melt inlet (20) and the melt outlet (30).

5. The blow head (100) according to any one of the preceding claims,
**characterized in that**
the displacement device (60) has a guide section (62) for guiding the displacement movement between the first position and the second position.

6. The blow head (100) according to any one of the preceding claims,
**characterized in that**
the displacement device (60) is designed for a displacement of the overturning device (10) between the first position and the second position along a translational path, in particular, along a straight line.

7. The blow head (100) according to any one of the preceding claims,
**characterized in that**
the displacement device (60) has a drive device (64), in particular, in the form of an electric motor, for implementing the displacement between the first position and the second position.

8. The blow head (100) according to any one of the preceding claims,
**characterized in that**
the overturning device (10) is arranged with respect to the length of the melt channel (110) in the center or substantially in the center of the melt channel (110).

9. The blow head (100) according to any one of the preceding claims,
**characterized in that**
the displacement device (60) is designed for at least two overturning devices (10), in order to make possible a joint displacement of two overturning devices (10), between a first position, in which the first overturning device (10) is located in fluid-communicating connection with the melt channel (110), and a second position, in which the second overturning device (10) is located in fluid-communicating connection with the melt channel 10).

10. A method for implementing a rinsing process in a blow head (110) with the features of any one of Claims 1 to 9, having the following steps:
- Displacement of the overturning device (10) by means of the displacement device (60) into a position with fluid-communicating connection with the melt channel (110),
- introduction of a molten material (200) into the melt inlet (20) of the overturning device (10),
- moving of molten material (200) from the center (22) of the melt inlet (20) to the edge (34) of the melt outlet (30) of the overturning device (10),
- moving of molten material (200) from the edge (24) of the melt inlet (20) to the center (32) of the melt outlet (30) and
- displacement of the overturning device (10) by means of the displacement device (60) into a position without fluid-communicating connection with the melt channel (110).

## Revendications

1. Tête de soufflage (100) pour l'exécution d'un procédé d'extrusion de film par soufflage, comprenant au moins un canal de fonte (110) pour le convoyage de fonte (200) vers une sortie de soufflage (120) de la tête de soufflage, moyennant quoi, dans l'au moins un canal de fonte (110), est disposé au moins un dispositif de retournement (10) pour le retournement d'une fonte (200) dans un canal de fonte (110), comprenant une entrée de fonte (20) et une sortie de fonte (30), moyennant quoi, entre l'entrée de fonte (20) et la sortie de fonte (30) est disposé au moins un moyen de guidage de fonte (40) pour une restructuration de la fonte (200) du centre (22) de l'entrée de fonte (20) vers le bord (34) de la sortie de fonte (30) et pour une restructuration de la fonte (200) du bord (24) de l'entrée de fonte (20) vers le centre (32) de la sortie de fonte (30),
**caractérisée en ce que**
la tête de soufflage (100) comprend un dispositif de coulissement (60) qui est conçu pour le coulissement du dispositif de retournement (10) entre une première position, dans laquelle l'entrée de fonte (20) et la sortie de fonte (30) sont en liaison de communication fluidique avec le canal de fonte (110) et une deuxième position, dans laquelle l'entrée de fonte (20) et la sortie de fonte (30) sont séparées du canal de fonte (110).

2. Tête de soufflage (100) selon la revendication 1,
**caractérisée en ce que**
l'au moins un moyen de guidage de fonte (40) comprend un premier canal de guidage (42) avec une ouverture de guidage (42a) au centre (22) de l'entrée de fonte (20) et au moins une sortie de guidage (42b) sur le bord (34) de la sortie de fonte (30) et/ou l'au moins un moyen de guidage de fonte (40) comprend un deuxième canal de guidage (44) avec une sortie de guidage (44b) au centre (32) de la sortie de fonte (30) et au moins une ouverture de guidage (44a) sur le bord (24) de l'entrée de fonte (20).

3. Tête de soufflage (100) selon l'une des revendications précédentes,
**caractérisée en ce que**
l'au moins un moyen de guidage de fonte (40) comprend une portion de division (46) avec un premier canal partiel (46a) et un deuxième canal partiel (46b), moyennant quoi, avant la portion de division (46), est disposée une portion de répartition (47) pour la répartition de la fonte (200) sur les canaux partiels (46a, 46b) et, après la portion de division (46), est disposée une portion de combinaison (48) pour le rassemblement de la fonte (200) provenant des canaux partiels (46a, 46b) et/ou la portion de combinaison (48) est conçue pour un rassemblement central des portions de bord de la fonte (200).

4. Tête de soufflage (100) selon l'une des revendications précédentes,
**caractérisée en ce que**
le dispositif de coulissement (60) comprend une pièce de canal de fonte (114) avec une longueur qui correspond ou correspond globalement au trajet entre l'entrée de fonte (20) et la sortie de fonte (30).

5. Tête de soufflage (100) selon l'une des revendications précédentes,
**caractérisée en ce que**
le dispositif de coulissement (60) comprend une portion de guidage (62) pour un guidage du mouvement de coulissement entre la première position et la deuxième position.

6. Tête de soufflage (100) selon l'une des revendications précédentes,
**caractérisée en ce que**
le dispositif de coulissement (60) est conçu pour un coulissement du dispositif de retournement (10) entre la première position et la deuxième position le long d'un trajet de translation, plus particulièrement le long d'une droite.

7. Tête de soufflage (100) selon l'une des revendications précédentes,
**caractérisée en ce que**
le dispositif de coulissement (60) comprend un dispositif d'entraînement (64), plus particulièrement sous la forme d'un moteur électrique, pour l'exécution du coulissement entre la première position et la deuxième position.

8. Tête de soufflage (100) selon l'une des revendications précédentes,
**caractérisée en ce que**
le dispositif de retournement (10) est disposé, par rapport à la longueur du canal de fonte (110), au centre ou globalement au centre du canal de fonte (110).

9. Tête de soufflage (100) selon l'une des revendications précédentes,
**caractérisée en ce que**
le dispositif de coulissement (60) est conçu pour au moins deux dispositifs de retournement (10), afin de permettre un coulissement conjoint de deux dispositifs de retournement (10), entre une première position, dans laquelle le premier dispositif de retournement (10) est en liaison de communication fluidique avec le canal de fonte (110), et une deuxième position, dans laquelle le deuxième dispositif de retournement (10) est en liaison de communication fluidique avec le canal de fonte (10).

10. Procédé d'exécution d'un processus de rinçage dans une tête de soufflage (110) présentant les caractéristiques d'une des revendications 1 à 9, comprenant les étapes suivantes :
- coulissement du dispositif de retournement (10) au moyen du dispositif de coulissement (60) dans une position avec une liaison de communication fluidique avec le canal de fonte (110),
- introduction d'une fonte (200) dans l'entrée de fonte (20) du dispositif de retournement (10),
- restructuration de la fonte (200) du centre (22) de l'entrée de fonte (20) vers le bord (34) de la sortie de fonte (30) du dispositif de retournement (10),
- restructuration de la fonte (200) du bord (24) de l'entrée de fonte (20) vers le centre (32) de la sortie de fonte (30) et
- coulissement du dispositif de retournement (10) au moyen du dispositif de coulissement (60) dans une position sans liaison de communication fluidique avec le canal de fonte (110).
